# EUROPEAN PATENT APPLICATION

(11) **EP 4 296 956 A1**
(43) Date of publication of application: **27.12.2023**
(21) Application number: 23163699.4
(22) Date of filing: 23.03.2023
(51) Int. Cl.: G06T 11/60, G06T 7/00

(54) **DEFECT DETECTION IN PARTIAL IMAGES CAPTURING AN ENTIRE INSPECTED INFRASTRUCTURE**

(30) Priority: 20.06.2022 JP 2022099048
(71) Applicant: CANON KABUSHIKI KAISHA, Tokyo 146-8501 (JP)
(72) Inventor: SUGIYAMA, Kenji, Tokyo, 146-8501 (JP); NOGAMI, Atsushi, Tokyo, 146-8501 (JP)
(74) Representative: TBK

(57) **Abstract**

An information processing apparatus comprises an input unit that inputs one or more images belonging to a predetermined group, a detection unit that detects defect information based on an image inputted by the input unit, a setting unit that sets identification information that is unique within the predetermined group to the defect information detected by the detection unit, and an output unit that outputs a detection result including the defect information to which the identification information has been given by the setting unit.

## Description

### BACKGROUND OF THE INVENTION

### Field of the Invention

The present invention relates to techniques for detecting a defect from an image in which an inspection target is captured and displaying the defect.

### Description of the Related Art

In infrastructure inspection, a defect is detected using an image in which an inspection target is captured, and a detection result is managed in association with the image of the inspection target.

Japanese Patent Laid-Open No. 2005-310044 describes a method of displaying an image in which an inspection target is captured in association with drawing information of a structure to be inspected and accepting input of a defect. In this case, an image captured with high definition is necessary for detecting a defect from an image of an inspection target; however, a size of an image in which the entire structure to be inspected is captured is extremely large, and so, a lot of effort is necessary in the work of detecting and inputting a defect.

Japanese Patent No. 6099479 describes a method of detecting a defect, such as cracking, by performing noise removal processing by wavelet transform on an image in which an inspection target is captured. Japanese Patent No. 5645730 describes a method of dividing an image of the entire structure to be inspected into images of a size suitable for image processing for defect detection and performing defect detection on the divided images.

However, when pieces of defect information, each detected for each divided image as in Japanese Patent No. 6099479 and Japanese Patent No. 5645730, are managed in association with drawing information of a structure to be inspected as in Japanese Patent Laid-Open No. 2005-310044, when the same identification information is given to different pieces of defect information, it is difficult to collectively manage defect information of the entire structure to be inspected.

### SUMMARY OF THE INVENTION

The present invention has been made in consideration of the aforementioned problems, and realizes techniques for managing each piece of defect information detected from an image in which an inspection target is captured, using unique identification information given to each piece of defect information.

In order to solve the aforementioned problems, the present invention provides an information processing apparatus as specified in claims 1 to 15.

In order to solve the aforementioned problems, the present invention provides an information processing method as specified in claim 16.

In order to solve the aforementioned problems, the present invention provides a computer-readable storage medium storing a program that causes a computer to execute the information processing method as specified in claim 17.

In order to solve the aforementioned problems, the present invention provides a program that causes a computer to execute the information processing control method as specified in claim 18.

According to the present invention, it is possible to manage each piece of defect information detected from an image in which an inspection target is captured, using unique identification information given to each piece of defect information.

Further features of the present invention will become apparent from the following description of exemplary embodiments (with reference to the attached drawings).

### BRIEF DESCRIPTION OF THE DRAWINGS

FIGS. 1A to 1F are diagrams for schematically explaining a first embodiment.
FIGS. 2A to 2D are diagrams illustrating a list of defect information according to the first embodiment.
FIG. 3A is a block diagram illustrating a hardware configuration of an information processing apparatus according to the first embodiment.
FIG. 3B is a functional block diagram of the information processing apparatus according to the first embodiment.
FIG. 4 is a flowchart illustrating control processing according to the first embodiment.
FIGS. 5A to 5C are diagrams illustrating processing for detecting a defect in a detection target.
FIG. 6 is a diagram illustrating outer shape information of a partial image.
FIG. 7 is a diagram illustrating an example of arranging defect information to be offset for each partial image.
FIG. 8 is a diagram illustrating a screen for selecting an offset pattern.
FIG. 9 is a functional block diagram of the image processing apparatus according to a second embodiment.
FIG. 10 is a flowchart illustrating control processing according to the second embodiment.
FIGS. 11A and 11B are diagrams illustrating coordinate transformation processing according to the second embodiment.
FIG. 12 is a diagram illustrating individual viewers and a drawing viewer of a third embodiment.

### DESCRIPTION OF THE EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

### [FIRST EMBODIMENT]

The following describes an embodiment in which an information processing apparatus of the present invention is applied to a computer apparatus used for inspection of infrastructure, such as a concrete structure, which is an example of an inspection target.

In a first embodiment, an example in which a computer apparatus operates as the information processing apparatus, executes defect detection processing on a plurality of partial images captured by dividing the entire structure to be inspected into a plurality of portions, gives unique and distinguishable identification information to each detected defect, and manages each detected defect in association with drawing information of the structure to be inspected will be described.

The definitions of main terms used in the description of the present embodiment are as follows.

An "inspection target" is a concrete structure to be a target of infrastructure inspection, such as a motorway, a bridge, a tunnel, or a dam. The information processing apparatus performs defect detection processing for detecting the presence/absence and state of a defect, such as cracking, using an image in which an inspection target is captured by a user.

In a case of a concrete structure, a "defect" is, for example, cracking, floating, or spalling of concrete. A "defect" also includes as other examples, efflorescence (crystalline deposit of salts), rebar exposure, rust, water leakage, water dripping, corrosion, damage (deficiency), cold joint, deposition, rock pocket, and the like.

"Defect information" includes unique identification information given to each defect and coordinate information representing a position and shape of the defect.

A "list of defect information" is information in which pieces of defect information to which identification information has been given are consolidated in a list.

A "partial image" is each image (detection image) captured by dividing the entire structure to be inspected into a plurality of portions.

An "image coordinate system" is a Cartesian coordinate system in a plane representing a coordinate position in a partial image.

A "drawing coordinate system" is a Cartesian coordinate system in a plane representing a coordinate position in drawing information of a structure to be inspected.

### <OVERVIEW>

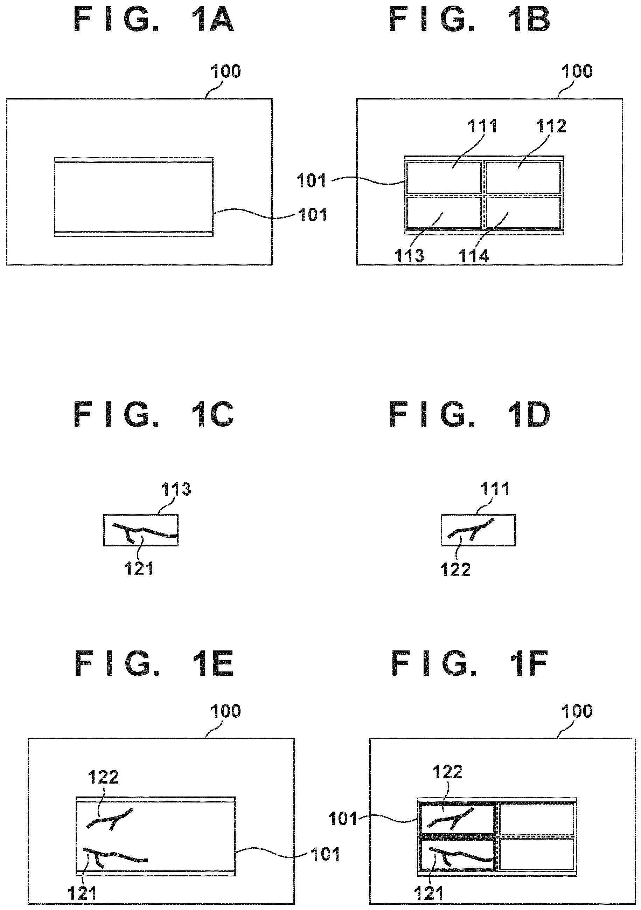

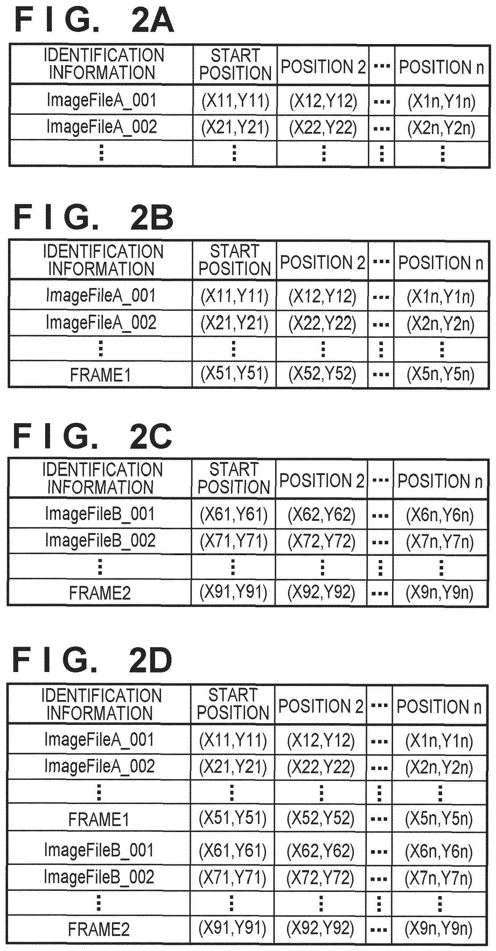

First, an overview of the present embodiment will be described with reference to FIGS. 1A to 1F and FIGS. 2A to 2D.

In inspection of infrastructure, such as a concrete structure, an inspector records a defect found by visually observing a wall surface and the like of a structure to be inspected. When performing inspection using an image (detection image) in which an inspection target is captured, the inspector records defect information, such as a position and shape of a defect, found in the detection image as an inspection result. The defect information is managed in association with drawing information of the structure to be inspected, together with the detection image. In this case, a lot of effort is involved in the work of the inspector finding and recording all of the defects in the detection image, and so, automatic detection and recording of defects by image processing and the like in which a computer apparatus is used is desirable.

Further, an image captured with high definition is necessary for detecting a defect from a detection image; however, it is difficult to capture an image fitting within that single image the entire structure to be inspected while maintaining a resolution necessary for image processing. It is possible to generate a single image of the entire structure by compositing a plurality of images captured by shifting the image capturing position with respect to the structure to be inspected; however, a size of the image will become extremely large, and it is difficult to execute defect detection processing in one go for an image of a large size due to constraints, such as a memory capacity of the information processing apparatus.

Therefore, in defect detection processing according to the present embodiment, the defect detection processing is performed on a partial image in which a portion of a structure to be inspected is captured. Each piece of defect information obtained as a detection result is managed in association with drawing information of the structure to be inspected, and identification information for distinguishing the pieces of defect information from each other and information, such as a position and shape, are outputted in a list. Furthermore, in the present embodiment, outer shape information of the partial image is added to the list of defect information to facilitate the work of displaying defect information to be superimposed on and accurately aligned with the drawing information of the structure to be inspected.

FIG. 1A illustrates a drawing 100 in which decking 101 of a bridge is drawn as an example of an inspection target. FIG. 1B illustrates a plurality of partial images 111 to 114 captured by dividing the decking 101 into a plurality of portions (four regions).

A user selects one partial image on which defect detection processing is to be performed from the partial images 111 to 114. There is no particular limitation on the order of selection. For example, when the user selects the partial image 113 positioned on the lower left, the information processing apparatus performs defect detection processing for the selected partial image 113 and acquires defect information.

FIG. 1C illustrates a state in which defect detection processing has been performed on the partial image 113 and acquired defect information 121 is displayed to be superimposed on the partial image 113. FIG. 1D illustrates a state in which defect detection processing has been performed on the partial image 111 and acquired defect information 122 is displayed to be superimposed on the partial image 111.

FIG. 2A illustrates a list of defect information acquired by performing defect detection processing on the partial image 113. Each piece of defect information is set to be a one row record, and each record includes unique identification information (ImageFileA 001, ImageFileA_002, ...) and a group of coordinate information representing positions and shapes of the defect. A character string that is non-duplicate and unique across the entire structure to be inspected is assigned as identification information for each defect. A method of generating identification information for each defect will be described later.

Defect information obtained by executing defect detection processing for each partial image is managed in association with drawing information of a structure to be inspected (hereinafter, just drawing information) generated by a design aid tool, such as CAD. Here, in order to display the defect information to be superimposed on and accurately aligned with the drawing information, it is necessary to adjust a position and scale of the defect information. FIG. 1E illustrates a state in which the defect information 121 and the defect information 122 are displayed to be superimposed on and aligned with the drawing 100 of the decking 101. In this case, when identification information of one piece of defect information and identification information of another piece of defect information overlap, various inconveniences occur. For example, when pieces of defect information with the same identification information are present in the same drawing information, the identification information no longer serves the purpose of uniquely indicating a piece of defect information. Also, one piece of defect information may be overwritten by the other piece of defect information when pieces of defect information are different from each other but have been given the same identification information, or the like.

Accordingly, in the present embodiment, identification information that is non-duplicate and unique across the entire structure to be inspected is given to defect information detected from a partial image, as illustrated in FIG. 2A. This makes it possible to reliably manage defect information in association with drawing information with little effort.

FIG. 2B illustrates a state in which outer shape information (FRAME1) of the partial image 113 has been added to the list of defect information acquired by executing defect detection processing on the partial image 113 illustrated in FIG. 2A. In addition, FIG. 2C illustrates a state in which outer shape information (FRAME2) of the partial image 111 has been added to a list of defect information acquired by executing defect detection processing on the partial image 111. Similarly to identification information of defect information, identification information that is unique across the entire structure to be inspected is given to outer shape information.

As described above, in order to display defect information to be superimposed on and accurately aligned with drawing information, it is necessary to adjust a position and scale of the defect information, and so, the user ends up performing laborious work. Specifically, the user needs to repeat trial and error, such as manual aligning of a position of vector data of defect information, which has been read into the drawing information, and changing of a magnification of the vector data, such that the vector data overlaps with a defect captured in a partial image. Therefore, in the present embodiment, outer shape information of a partial image, which is useful when aligning defect information with the drawing information, is added to the list of defect information.

FIG. 1F illustrates a state in which the defect information 121 and the defect information 122 are pasted into and aligned with the drawing 100 of the decking 101, together with outer shape information of the partial images. When it is possible to use outer shape information of a partial image, it is possible to accurately display defect information to be superimposed on the drawing information with little work by adjusting a position and scale of the outer shape information of the partial image according to a partial image in the drawing information. For example, it is possible to display vector data of defect information, which has been read into the drawing information, to be accurately superimposed on a defect captured in a partial image by the user simply aligning one vertex of outer shape information of a partial image with that of a partial image in the drawing information and changing a scale such that another vertex, which is that of an angle opposite to that of the one vertex, overlaps with that of the partial image in the drawing information. FIG. 2D illustrates a list of defect information in which the defect information detected from the partial image 113 and the defect information detected from the partial image 111 have been merged.

In contrast, when it is not possible to use outer shape information, the user needs to repeat laborious work, such as aligning of a position of a defect with the drawing information and changing of a magnification of vector data of defect information, as described above.

By thus giving unique identification information to each piece of defect information detected from a partial image, it is possible manage pieces of defect information that are different from each other to be merged without an overlap or overwriting, for the entire structure to be inspected. Further, by including outer shape information of the partial image in a list of defect information, the work of aligning the defect information to the drawing information is facilitated.

### <HARDWARE CONFIGURATION>

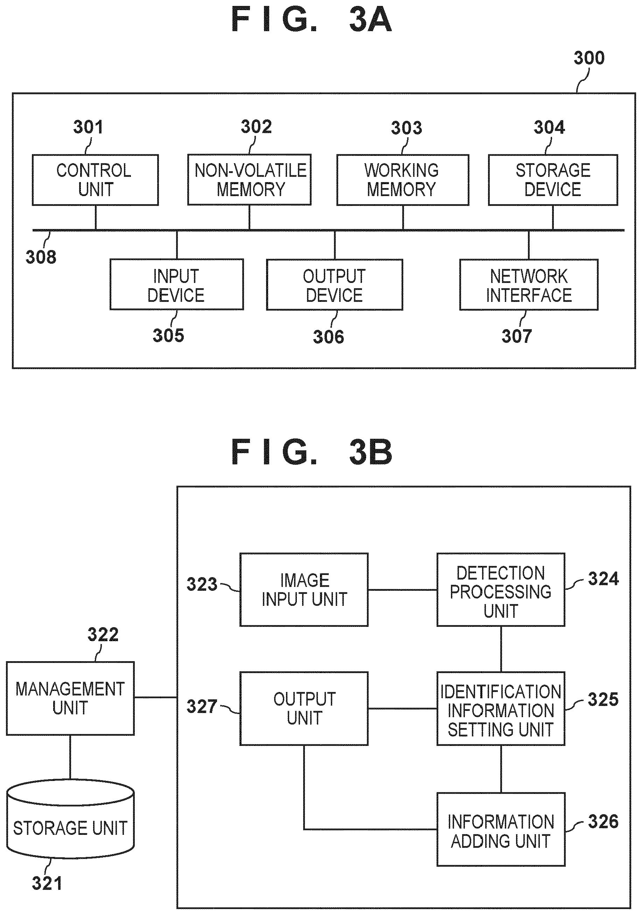

Next, a hardware configuration of the information processing apparatus according to the first embodiment will be described with reference to FIG. 3A.

FIG. 3A is a block diagram illustrating a hardware configuration of an information processing apparatus 300 according to the first embodiment.

In the first embodiment, a computer apparatus operates as the information processing apparatus 300. The processing of the information processing apparatus of the present embodiment may be realized by a single computer apparatus or may be realized by functions being distributed as necessary among a plurality of computer apparatuses. The plurality of computer apparatuses are connected to each other so as to be capable of communication.

The information processing apparatus 300 includes a control unit 301, a non-volatile memory 302, a working memory 303, a storage device 304, an input device 305, an output device 306, a network interface 307, and a system bus 308.

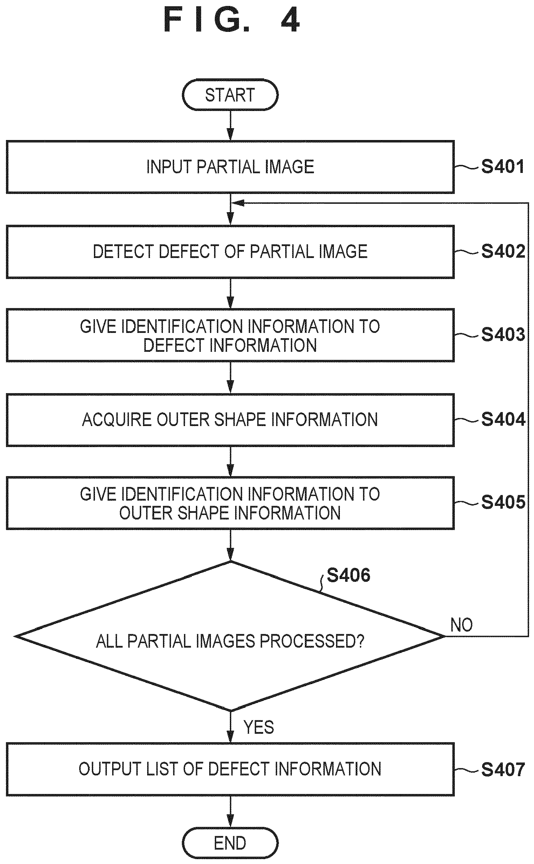

The control unit 301 includes a computational processor, such as a CPU or an MPU, for comprehensively controlling the entire information processing apparatus 300. The non-volatile memory 302 is a ROM for storing a program to be executed by the processor of the control unit 301 and parameters. Here, the program is a program for executing processing of first and second embodiments, which will be described later. The working memory 303 is a RAM for temporarily storing programs and data supplied from an external apparatus and the like. The working memory 303 holds data obtained by executing control processing of FIG. 4, which will be described later.

The storage device 304 is an internal device, such as a hard disk or a memory card incorporated in the information processing apparatus 300; an external device, such as a hard disk or a memory card connected to the information processing apparatus 300 so as to be capable of being attached thereto and detached therefrom; or a server device connected via a network. The storage device 304 includes a memory card, a hard disk, and the like configured by semiconductor memory, a magnetic disk, and the like. The storage device 304 also includes a storage medium configured by a disk drive for reading data from and writing data to an optical disk, such as a DVD or a Blue-ray Disc.

The input device 305 is an operation member such as a mouse, a keyboard, or a touch panel for receiving a user operation, and outputs operation instructions to the control unit 301. The output device 306 is a display device, such as a display or a monitor configured by an LCD or organic EL, and displays a list of defect information generated by the information processing apparatus 300 or the server device. The network interface 307 is connected to a network, such as the Internet or a local area network (LAN), so as to be capable of communication. The system bus 308 includes an address bus, a data bus, and a control bus for connecting each of the components 301 to 307 of the information processing apparatus 300 so as to exchange data.

The non-volatile memory 302, stores an operating system (OS), which is basic software to be executed by the control unit 301, and applications for realizing applied functions in cooperation with the OS. Further, in the present embodiment, the non-volatile memory 302 stores an application with which the information processing apparatus 300 realizes control processing, which will be described later.

The control processing of the information processing apparatus 300 according to the present embodiment is realized by reading the software provided by the application. Assume that the application includes software for utilizing basic functions of the OS installed in the information processing apparatus 300. The OS of the information processing apparatus 300 may include software for realizing the control processing in the present embodiment.

### <FUNCTIONAL CONFIGURATION>

Next, functional blocks of the information processing apparatus 300 according to the first embodiment will be described with reference to FIG. 3B.

FIG. 3B is a functional block diagram of the information processing apparatus 300 according to the first embodiment.

The information processing apparatus 300 includes a storage unit 321, a management unit 322, an image input unit 323, a detection processing unit 324, an identification information setting unit 325, an information adding unit 326, and an output unit 327.

Each function of the information processing apparatus 300 is configured by hardware and/or software. A configuration may be taken such that each functional unit is configured by one or more computer apparatuses or server apparatuses, and these constitute a system connected by a network. Further when each functional unit illustrated in FIG. 3B is configured by hardware instead of being realized by software, there need only be provided a circuit configuration corresponding to each functional unit in FIG. 3B.

The storage unit 321 corresponds to the storage device 304, and a partial image and defect information can be written and read out by the management unit 322.

The management unit 322 performs management, such as registration, deletion, and updating, of a partial image, defect information, and the like stored in the storage unit 321.

The image input unit 323 inputs a partial image to be processed which is read out from the storage unit 321 by the management unit 322 and on which the defect detection processing is to be executed.

The detection processing unit 324 executes the defect detection processing for the partial image to be processed inputted by the image input unit 323 and generates a list of defect information in which defect information, which is a detection result, is consolidated.

The identification information setting unit 325 sets unique identification information to the defect information acquired by the defect detection processing.

The information adding unit 326 adds outer shape information of a partial image to the list of defect information.

The output unit 327 displays the list of defect information on the output device 306 and stores the list of defect information in the storage unit 321 by the management unit 322.

### <CONTROL PROCESSING>

Next, control processing of the information processing apparatus 300 according to the first embodiment will be described with reference to FIG. 4.

The processing of FIG. 4 is realized by the control unit 301 of the information processing apparatus 300 illustrated in FIG. 3A operating as each of the functional units illustrated in FIG. 3B by controlling each of the components illustrated in FIG. 3A by loading and executing a computer program stored in the non-volatile memory 302 in the working memory 303. Further, the processing of FIG. 4 is started when the information processing apparatus 300 receives an instruction for starting defect detection processing by the input device 305.

### <STEP S401: INPUT PARTIAL IMAGE TO BE PROCESSED>

The image input unit 323 inputs one or more partial images to be processed read out from the storage unit 321 by the management unit 322. The one or more partial image to be processed is, for example, one or more partial images belonging to a predetermined group specified by the user. The predetermined group is, for example, a group of images in which the same inspection target is captured, a group of images captured at the same time of day, or a group of images captured at the same location. In the present embodiment, the group of images in which the same inspection target is captured are treated as images of the same group. Methods by which the user manages images for each group include, for example, a method of classifying and storing images into a folder or a directory of a file system; a method of classifying images according to a naming rule, such as adding a prefix and the like to a file name; a method of classifying images by adding information indicating a group to attributes of the images; a method of managing images in a database in association with group information; and the like.

At the start of processing, the user specifies one or more partial images belonging to the predetermined group. An image file may be directly specified, or specification may be performed in units of groups according to the above-described method of classifying images in a file. When specification is performed in units of groups, image files belonging to a specified group are the partial images to be processed. For example, when partial images are stored by being classified into a folder or a directory of a file system, a plurality of partial images in which the same inspection target is captured that are stored in the same folder can be specified by specifying a folder of a desired inspection target.

In the present embodiment, an example in which the user specifies a partial image belonging to one group is described; however, a configuration may be taken so as to allow the user to input a partial image of a plurality of groups. In this case, information indicating a relationship between a group and a partial image belonging to that group is stored in advance in the storage unit 321 by the management unit 322.

When a user specifies a plurality of partial images, there is no particular limitation to the order in which the partial images are inputted by the image input unit 323 in step S401; however, a configuration is taken so as to avoid repeated input of the same partial image. In the present embodiment, a description will be given assuming that a partial image is a single image generated by a single instance of image capturing; however, a partial image may be an image for which a plurality of captured images have been combined or an image for which an image has been divided into a plurality of images.

### <STEP S402: DEFECT DETECTION PROCESSING>

The detection processing unit 324 performs the defect detection processing on the partial image inputted by the image input unit 323 in step S401.

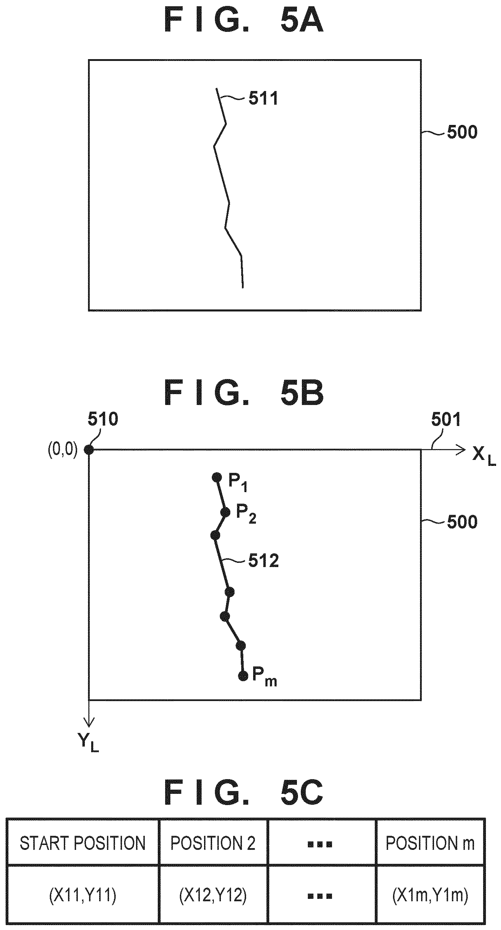

FIGS. 5A to 5C are diagrams illustrating processing of detecting cracking as an example of a defect to be detected. For descriptive simplicity, FIGS. 5A to 5C illustrate a state in which only one crack is captured in a partial image.

FIG. 5A illustrates a partial image 500 in which cracking 511 is captured. FIG. 5B illustrates defect information detected from the partial image 500. An example of FIG. 5B illustrates a state in which defect information 512 of the cracking 511 detected from the partial image 500 is displayed to be superimposed on the partial image 500 illustrated in FIG. 5A. The defect information 512 is configured as vector data associated with an image coordinate system 501 whose origin is set to be at a vertex 510 on the upper left corner of the partial image 500, and includes positions P1 to Pm. The positions P1 to Pm each include position coordinates of the image coordinate system, and the cracking is expressed by connecting each of the positions with a straight line. FIG. 5C illustrates a data structure of vector data of the defect information 512. The defect information 512 may be configured as raster data. In this case, the cracking is expressed by a group of positions of the image coordinate system.

In addition, the defect detection processing can be executed using, for example, a learned model for which learning processing has been performed by artificial intelligence (AI) machine learning or deep learning, which is a kind of machine learning, and parameters. The learned model, for example, can be configured by a neural network model. For example, a learned model for which learning processing has been performed using different parameters may be prepared for each type of cracking, which is a defect to be detected, and the learned models may be used separately for each crack to be detected, or a learned general-purpose model capable of detecting various types of cracking may be used. In addition, the learned models may be used separately based on texture information of a partial image. Methods for obtaining texture information from a partial image include, for example, a method of determination based on spatial frequency information of an image obtained by FFT. The learning processing may be executed by a graphics processing unit (GPU). The GPU is processor capable of performing processing specialized for computation of computer graphics, and has computational processing capabilities for performing matrix computations and the like necessary for learning processing in a short time. The learning processing is not limited to being performed in the GPU and a circuit configuration for performing matrix computations and the like necessary for a neural network need only be provided.

A learned model and parameters to be used for the defect detection processing may be acquired via the network interface 307 from a cloud server and the like connected to a network. In addition, a configuration may be taken so as to transmit a detection image and parameters to a cloud server and acquire via the network interface 307 a result obtained by executing the defect detection processing using a learned model on the cloud server.

The defect detection processing is not limited to a method in which a learned model is used and may be realized by, for example, performing image processing by wavelet transform or other image analysis processing or image recognition processing on a detection image as in the above-mentioned Japanese Patent No. 6099479. Also, in this case, a detection result of a defect, such as cracking, is not limited to being vector data but may be raster data.

Further, the defect detection processing may be executed in parallel for a plurality of partial images. In this case, the image input unit 323 inputs a plurality of partial images in step S401, the defect detection processing is executed in parallel by the detection processing unit 324 for each partial image, and a detection result for each partial image is acquired. The acquired detection result is outputted as vector data of the image coordinate system associated with each partial image.

### <STEP S403: GIVING IDENTIFICATION INFORMATION TO DEFECT INFORMATION>

The identification information setting unit 325 generates and allocates unique identification information for each piece of defect information detected by the detection processing unit 324 in step S402. Unique means that there is no duplicate identification information in the defect information detected from partial images belonging to the same group. In the present embodiment, assume that partial images in which the same inspection target is captured are partial images of the same group.

One method of generating identification information is, for example, a method of setting as a prefix a character string uniquely indicating a partial image and setting as identification information a character string for which the prefix and a serial number are concatenated. Specifically, examples include, for example, a character string (ImageFileA 001, ImageFileA_002, ..., ImageFileB_001, ImageFileB_002, ...) for which a character string uniquely indicating a partial image (ImageFileA, ImageFileB, ...) is set as a prefix, an underscore (_) or a hyphen (-) is set as a concatenating character string, and a serial number for which a numerical value incrementing by one each time a defect is detected is concatenated at the end. For a character string uniquely indicating a partial image, a file path or a file name guaranteed to be unique in a file system may be used or an internal serial number may be given at the time of image input. In addition, a non-duplicate character string may be generated for each image using a known method of generating identification information, such as a UUID, or a known hash function.

Another method of generating identification information is, for example, a method in which the identification information setting unit 325 accepts issuance of identification information in one queue and sequentially generates serial numbers while increasing the numerical value. Specifically, each time the detection processing unit 324 detects a defect, the detection processing unit 324 makes a request for issuance of identification information to the identification information setting unit 325, and serial number identification information, such as 1, 2, and 3, is returned in the order of request acceptance. In this case, a particular string may be combined with the serial number. Since the identification information setting unit 325 issues identification information different from identification information that has already been issued, it is maintained that the identification information is unique. Instead of a serial number, a known method of generating identification information, such as a UUID, may be used, or a unique hash value for which a known hash function is used may be used.

In addition, when the defect detection processing is executed in parallel, a character string indicating an execution job (such as a job ID) may be concatenated as a prefix to avoid duplication of identification information among execution jobs.

### <STEP S404: ACQUIRING OUTER SHAPE INFORMATION OF PARTIAL IMAGE>

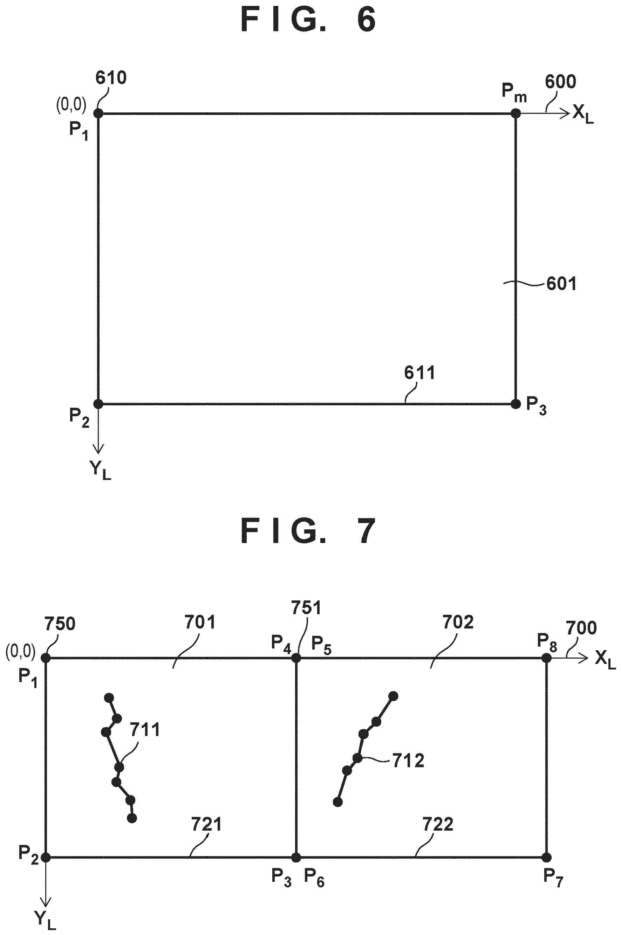

The information adding unit 326 acquires outer shape information of the partial image inputted by the image input unit 323 and adds the outer shape information to the list of defect information. FIG. 6 illustrates outer shape information of a partial image 601 associated with an image coordinate system 600. In the example of FIG. 6, an upper left vertex 610 of the partial image is set as an origin of the image coordinate system 600. Outer shape information 611 is configured as vector data and includes positions P1 to Pm. The positions P1 to Pm each include position coordinates of the image coordinate system 600, and the outer shape information is expressed by connecting each of the positions with a straight line. The outer shape information 611 may be configured as raster data. In this case, the outer shape information is expressed by a group of positions of the image coordinate system. The partial image does not necessarily need to be a quadrilateral, and a case where the partial image includes transparency information and an image to be displayed is of a shape other than a quadrilateral is conceivable. In such a case, outer shape information of the displayed image may be acquired.

### <STEP S405: GIVING IDENTIFICATION INFORMATION TO OUTER SHAPE OF IMAGE>

The identification information setting unit 325 generates and allocates identification information to the outer shape information of the partial image acquired by the information adding unit 326 in step S404. Similarly to when the identification information is given to the defect information in step S403, the identification information is a character string that is non-duplicate and unique within a range of the same inspection target. Since the outer shape information is added to the list of defect information, the identification information is non-duplicate even in defect information detected from partial images belonging to different groups. However, identification information by which the outer shape information and the defect information of other groups can be distinguished is set.

Methods of giving identification information to the outer shape information include, for example, a method of not using in the identification information of the defect information a character string or a symbol (such as "FRAME" or "@") indicating a shape of an image as a reserved word or a reserved character and setting a character string for which that character string or symbol is concatenated as a prefix or a suffix, and the like.

By thus including the outer shape information of the partial image to be processed in the list of defect information, it is possible to facilitate the user's work of managing the defect information in association with the drawing information. In contrast, in order to display the list of defect information in which the outer shape information is not included to be accurately aligned with and superimposed on the drawing information, the defect information detected from the partial image is first read into a design aid tool, such as CAD, in which the drawing information can be viewed. The user then needs to manually align a position and scale of the defect information with a partial image in the drawing information.

When the outer shape information of the partial image is included in the list of defect information, by simply performing the work of adjusting a position and scale of the outer shape information to a range of the partial image the user can simultaneously adjust the position and scale of the defect information. For example, it is possible to align the defect information simply by aligning upper left vertices of rectangle partial images in the drawing information and enlarging and reducing vector data so that lower right vertices overlap. In this case, it is desirable that the partial image is read into a design aid tool, such as CAD, in which the drawing information can be viewed and the partial image is aligned with the drawing information. Furthermore, it is desirable that the partial image is in a range in which it can be easily distinguished in the structure to be inspected. Specifically, it is advantageous when the partial image corresponds to a single span of a deck of a bridge or a single span of a tunnel. Furthermore, software for viewing the drawing information may be configured such that that when the defect information including the outer shape information is brought close to a range of the partial image displayed together with the drawing, the defect information is automatically moved and transformed such that the defect information fits in the range of the partial image based on the outer shape information.

### <STEP S406: DETERMINING WHETHER ALL PARTIAL IMAGES HAVE BEEN PROCESSED>

The control unit 301 determines whether the processing from step S402 to step S405 has been executed for all the partial images inputted by the image input unit 323 in step S401. Then, when the processing has been completed, the control unit 301 proceeds to step S407, and when the processing has not been completed, the control unit 301 returns to step S402 and repeats the processing from step S402 to step S405.

### <STEP S407: OUTPUTTING LIST OF DEFECT INFORMATION>

The output unit 327 outputs information obtained by adding the outer shape information of the partial images to the defect information detected from the partial images as a list of defect information. The list of defect information, for example, is in a tabular format, such as CSV, or is general-purpose CAD data. The list of defect information includes an image coordinate system file for each partial image (a separate list of defect information) and a drawing coordinate system file in which a file for each partial image has been merged with each other for the entire structure to be inspected (a merged list of defect information); however, either one of these may be outputted depending on the application.

Regarding the merged list of defect information, a change of identification information may be applied according to a specific rule. For example, a character string (such as "MERGED _") indicating merging is added as a prefix to the beginning of the identification information. Assume that a rule for changing identification information is able to maintain a state in which identification information can be associated between the separate lists of defect information and the merged list of defect information. That is, the change rule is such that identification information of a defect can be derived from other identification information that indicates the same defect and identification information is not made to overlap with identification information of a list of defect information of a different group if the identification information is changed.

As described above, according to the first embodiment, defect information detected for each partial image can be managed in association with the drawing information and merged for the entire structure to be inspected. Further, the work of aligning the defect information to the drawing information is facilitated.

### [VARIATION]

In the above-described first embodiment, identification information unique to defect information detected from a partial image is given, and a list of defect information in which outer shape information of the partial image is added is generated. In addition to this, in order to further facilitate the work of adjusting a position and scale of the defect information to the partial image in the drawing information, a list of defect information in which defect information is offset in advance at regular intervals may be outputted. The defect information detected from the partial image, for example, is represented by coordinate information of the image coordinate system with the upper left point of the partial image as the origin, and so, when the defect information is read into the drawing information by a design aid tool, such as a CAD, it is read into relatively the same position. However, in many cases, the partial images are generated by capturing (or dividing) the structure to be inspected into rows or a grid at regular intervals. Therefore, the list of defect information may be such that coordinate information of the defect information is offset at regular intervals such that the partial images are arranged adjacent to each other.

FIG. 7 illustrates a state in which defect information 711 detected from a partial image 701 and outer shape information 722 of a partial image 702 are arranged to be offset in the same image coordinate system. The defect information 711 detected from the partial image 701 is represented by coordinate information of an image coordinate system 700 whose origin is an upper left vertex 750 of the partial image 701. Similarly, outer shape information 721 of the partial image 701 is also represented by coordinate information of the image coordinate system 700. In contrast, defect information 712 detected from the partial image 702 and the outer shape information 722 are represented not by the image coordinate system whose origin is the upper left vertex 750 of the partial image 701 but by coordinate information obtained by offsetting the origin to an upper left vertex 751 of the partial image 702. By thus offsetting the defect information of the partial images at regular intervals (offsetting the origin of the image coordinate system), when displaying defect information of a plurality of partial images in the same image coordinate system, it is possible to display defect information for each partial image in a state in which they are offset at regular intervals such that the partial images are arranged adjacent to each other.

In the example of FIG. 7, an offset distance is the width of the partial image 701 (the length from a point P1 to a point P4); however, the offset distance may be a distance obtained by multiplying a factor, such as 1.2, or a distance obtained by adding a constant value.

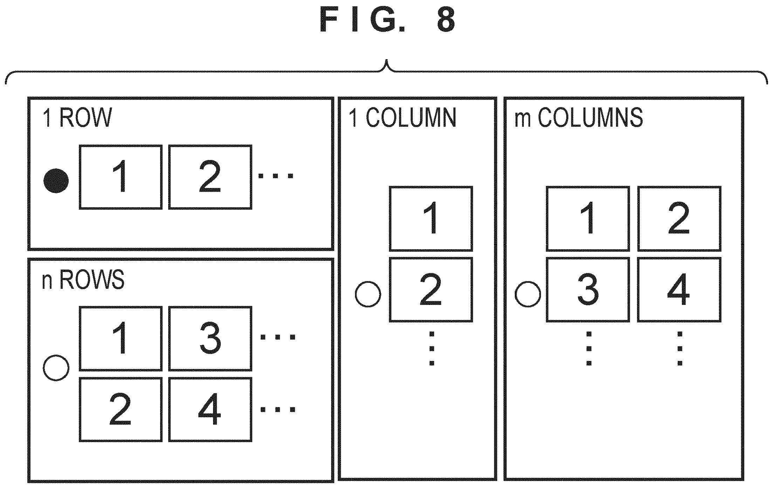

A configuration may be taken so as to allow the user to select a method of offset. FIG. 8 illustrates a UI screen in which an offset pattern can be selected by the user. In the example of FIG. 8, the user can select any one of one row, n rows (n is inputted by the user), one column, and m columns (m is inputted by the user), and depending on the pattern specified by the user, a list of defect information in which coordinate information of defect information and outer shape information for each partial image is offset at regular intervals is outputted.

As described above, according to a variation of the first embodiment, in addition to the effect of the first embodiment, work of aligning defect information with the drawing information is further facilitated.

### [SECOND EMBODIMENT]

In a second embodiment, an example of further facilitating the work of aligning defect information to drawing information by converting coordinate information of the defect information from an image coordinate system of a partial image to a drawing coordinate system of a structure to be inspected will be described. Specifically, a list of defect information for which coordinate information of defect information has been converted into coordinate information of drawing information is outputted according to information (a position and resolution of a partial image) necessary for coordinate transformation inputted by the user. This eliminates the need to perform the work of aligning defect information to drawing information by the user simply inputting information necessary for coordinate transformation and reading a list of defect information of the drawing coordinate system into the drawing information.

Further, in the second embodiment, a problem and a countermeasure for when defect detection is performed again on a partial image for a portion on which defect detection has already been performed will also be described.

For example, the following cases are conceivable as cases where defect detection performed again for a portion on which defect detection has already been performed.

Defect detection is performed on a partial image in which the same inspection target is recaptured after some time in order to investigate and record a change in defect over time.

Defect detection is performed on a partial image in which an inspection target is recaptured with improvement in a condition, such as weather and resolution.

Defect detection is performed again on the same partial image using more optimal parameters and a more optimal learned model.

In such cases, when identification information of redetected defect information overlaps with identification information of other defect information detected in the past, it is difficult to manage the defect information in association with the drawing information. Therefore, in the present embodiment, identification information that does not overlap with other defect information detected in the past is given to the redetected defect information.

The following mainly describes parts that are different from the first embodiment.

A hardware configuration of the information processing apparatus 300 according to the second embodiment is similar to the configuration illustrated in FIG. 3A.

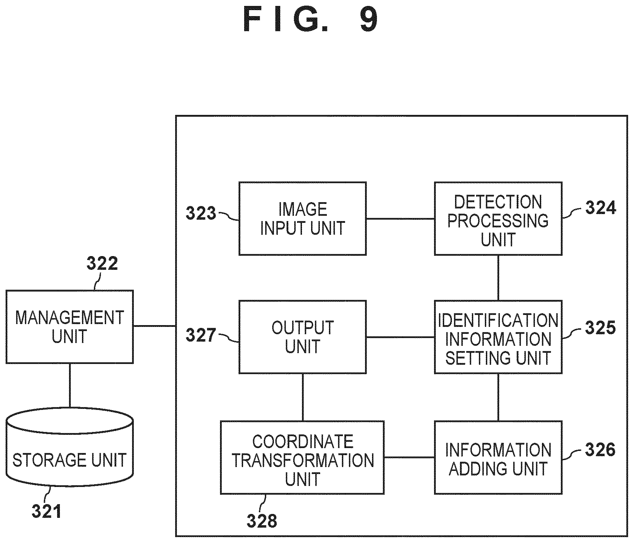

FIG. 9 is a functional block diagram of the information processing apparatus 300 according to the second embodiment.

In the second embodiment, a coordinate transformation unit 328 is added to the configuration illustrated in FIG. 3B. The coordinate transformation unit 328 performs processing for transforming coordinate information of defect information from the image coordinate system of a partial image to the drawing coordinate system of the drawing information.

Each function of the information processing apparatus 300 is configured by hardware and/or software. A configuration may be taken such that each functional unit is configured by one or more computer apparatuses or server apparatuses, and these constitute a system connected by a network. Further when each functional unit illustrated in FIG. 9 is configured by hardware instead of being realized by software, there need only be provided a circuit configuration corresponding to each functional unit in FIG. 9.

### <CONTROL PROCESSING>

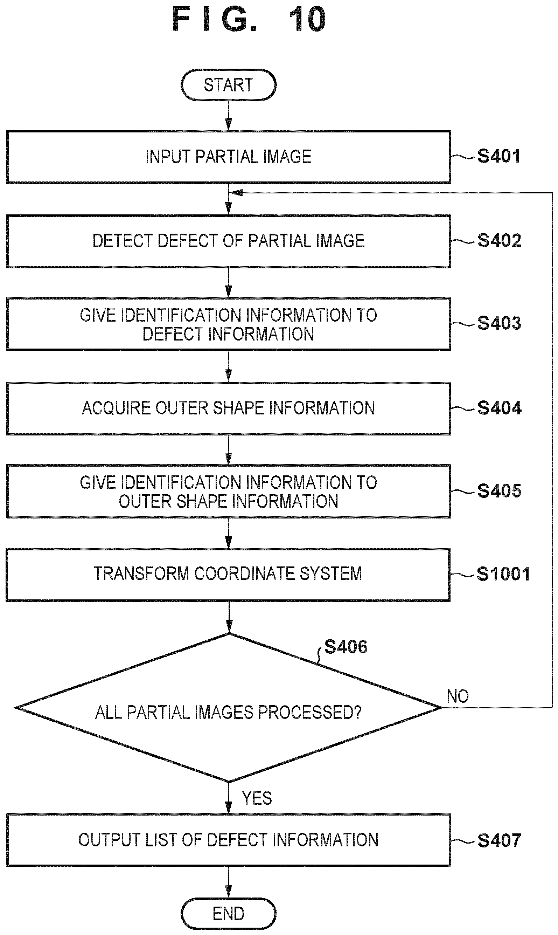

Next, control processing of the information processing apparatus 300 according to the second embodiment will be described with reference to FIG. 10.

The processing of FIG. 10 is realized by the control unit 301 of the information processing apparatus 300 illustrated in FIG. 3A operating as each of the functional units illustrated in FIG. 9 by controlling each of the components illustrated in FIG. 9 by loading and executing a computer program stored in the non-volatile memory 302 in the working memory 303. Further, the processing of FIG. 10 is started when the information processing apparatus 300 receives an instruction for starting defect detection processing by the input device 305.

From step S401 to step S405, the processing similar to that from step S401 to S405 of FIG. 4 is performed.

In step S1001, the coordinate transformation unit 328 converts the coordinate information of the defect information and the outer shape information of the partial image acquired in the processing from step S401 to step S405 from the image coordinate system to the drawing coordinate system. In the first embodiment, as described in FIG. 5B, the coordinate information of the defect information is represented in the image coordinate system in which the origin is the upper left vertex of the partial image. In contrast, in the second embodiment, the coordinate information of the image coordinate system is converted into the coordinate information of the drawing coordinate system. The information (partial image information) necessary for coordinate transformation is inputted by the user when the image input unit 323 inputs the partial image. The partial image information is, specifically, a position and resolution (scale) of the partial image in the drawing information.

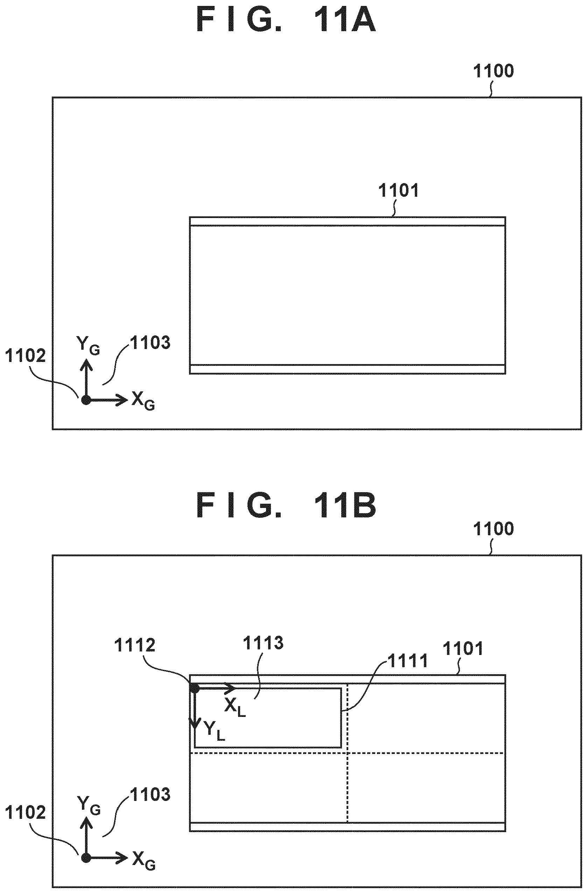

FIG. 11A illustrates a drawing 1100 in which decking 1101 of a bridge is depicted as an example of infrastructure and a drawing coordinate system 1103 with a position 1102 as the origin. FIG. 11B illustrates a partial image 1111 in which a portion of the decking 1101 is captured and an image coordinate system 1113 in which an upper left vertex 1112 of the partial image 1111 is the origin. In the present embodiment, units of the image coordinate system 1113 are in pixels, and units of the drawing coordinate system 1103 are in meters. The defect information detected from the partial image 1111 is represented by the coordinate information of the image coordinate system 1113. This is converted into the coordinate information of the drawing coordinate system 1103. In coordinate transformation processing, calculation can be performed based on a position of the origin 1112 of the image coordinate system 1113 represented by the coordinate information of the drawing coordinate system 1103 and a ratio of the units of the image coordinate system 1113 and the units of the drawing coordinate system 1103, that is, information of resolution (how many meters in the drawing coordinate system one pixel in the image coordinate system corresponds to).

By performing coordinate transformation using the partial image information inputted by the user, it is possible to generate a list of defect information representing in the drawing coordinate system the detected defect information for each partial image. Then, by reading the list of defect information of the drawing coordinate system into the drawing information, the user can display defect information to be superimposed on the drawing information without the need to adjust a position and scale of the defect information with respect to the drawing information. As a result, the work for when defect information is read into the drawing information is reduced, and so, it becomes easy to manage defect information in association with the drawing information.

The list of defect information of the image coordinate system may be outputted together with the list of defect information represented by the drawing coordinate system. The list of defect information may be output to be divided for each partial image or may be outputted to be merged for each group.

Next, processing for giving identification information that does not overlap with other defect information detected in the past to redetected defect information when defect detection performed again on a partial image for a portion for which defect detection has already been performed will be described.

In the first embodiment, a method of generating unique identification information such that duplicate identification information is not present in defect information detected from partial images belonging to the same group has been described. In the second embodiment, in addition to the first embodiment, each time identification information is generated, issued identification information is stored for each group, and when new identification information is generated, identification information that does not overlap with existing identification information of the same group is generated.

For example, in the generation method in which serial numbers are used, it is possible to generate identification information that does not overlap with existing identification information of the same group by storing used numerals for each group and always using a new numerical value when generating new identification information. In the example of FIG. 9, each time the identification information setting unit 325 generates identification information, the management unit 322 reads out information related to a group to which the partial image belongs and issued identification information from the storage unit 321, generates new identification information, and stores identification information issued for the group.

In a case where it can be considered that a redetected defect is the same as a defect detected in the past, that is, in a case where it can be determined that a state of a redetected defect is the same as a state of a defect detected in the past, identification information that is the same as existing identification information may be given. A known technique is used for comparison of new and old defect information, and a determination threshold is set. For example, coordinate information of new defect information and coordinate information of old defect information are compared and it is determined whether a difference therebetween is within a predetermined range, or when a length and angle of a line segment representing cracking has extended beyond a predetermined range in consideration of a change in a defect over time, it is determined that the same cracking has progressed.

If the same identification information is given to pieces of defect information which is considered to be equivalent, it is possible to use information related to identification information of existing defect information as it is, estimate a pace of deterioration of the structure by managing a change in a defect over time, and the like, thereby reducing the effort it takes to manage a defect of the structure to be inspected.

As described above, according to the second embodiment, the work of aligning redetected defect information for each partial image to the drawing information is facilitated, thereby making it possible for the redetected defect information to be managed in association with the drawing information.

### [THIRD EMBODIMENT]

In the above-described first and second embodiments, it has been described that unique identification information is given to defect information, and it is possible to output a list of defect information of the image coordinate system and defect information of the drawing coordinate system that can be displayed to be superimposed on a partial image and the drawing information, respectively. Therefore, in the third embodiment, an example in which it is possible to use an individual viewer in which defect information can be edited for each partial image and a drawing viewer in which defect information can be edited in the drawing information of the entire structure to be inspected is described.

When an inspector performs an infrastructure inspection while confirming defect information on site, it is difficult to carry high-performance information processing apparatus and a large screen display apparatus from the viewpoint of portability and the like. Therefore, in the present embodiment, defect information of the entire structure to be inspected is collectively managed on a server, thereby making it possible to confirm or edit defect information using an individual viewer on site. Since high information processing capabilities and large screen output are not necessary for the individual viewer, inspection work can be performed using a portable terminal, such as a tablet. In addition, the drawing viewer is used when confirming and editing the defect of the entire structure to be inspected, such as when generating an inspection work report. Since editing work in each viewer is collected on the server, it is possible to support simultaneous editing according to inspection work by a plurality of persons.

The following describes the third embodiment, mainly on parts that are different from the first and second embodiments.

A hardware configuration of the information processing apparatus 300 according to the third embodiment is similar to that of the information processing apparatus 300 of the first embodiment illustrated in FIG. 3A. A functional configuration of the information processing apparatus 300 according to the third embodiment is similar to that of the information processing apparatus 300 according to the first embodiment illustrated in FIG. 3B or the second embodiment illustrated in FIG. 9. However, in the present embodiment, three different information processing apparatuses (an individual viewer, a drawing viewer, and a server) are used.

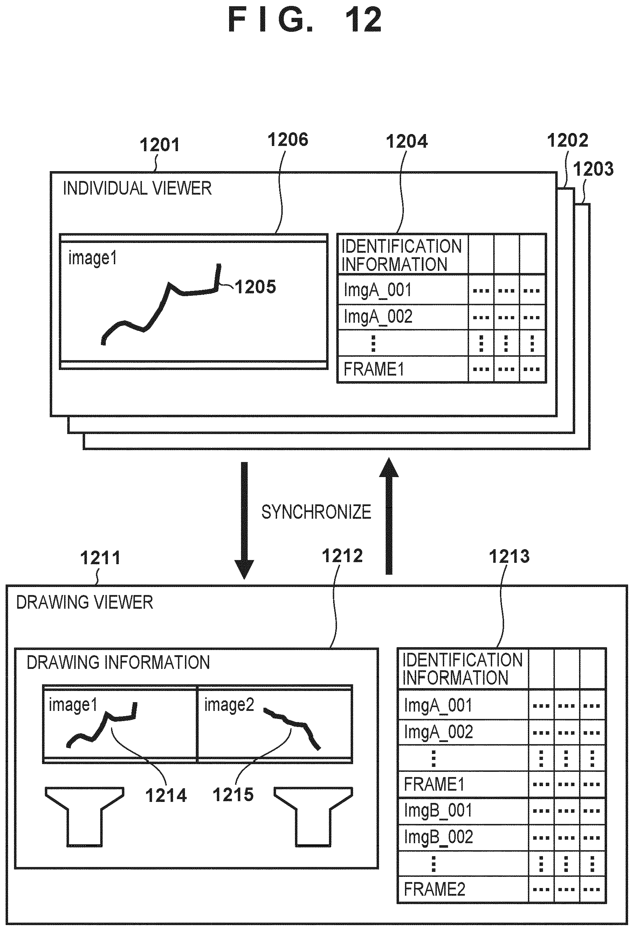

FIG. 12 illustrates individual viewers 1201, 1202, and 1203 and a drawing viewer 1211. The individual viewer 1201 displays a partial image 1206, defect information 1205 displayed to be superimposed, and a list of defect information 1204. The drawing viewer 1211 displays a drawing 1212 of the structure to be inspected, defect information 1214 and 1215 displayed to be superimposed, and a list of defect information 1213. The individual viewer display an editing screen based on a list of defect information represented by the image coordinate system for each partial image. The drawing viewer display an editing screen based on a list of defect information represented by the drawing coordinate system of the structure to be inspected.

The individual viewers 1201, 1202, and 1203 and the drawing viewer 1211 mutually synchronize information with each other. That is, content edited in the individual viewer is reflected in the list of defect information of the drawing viewer, and content edited in the drawing viewer is reflected in the list of defect information of the individual viewers.

First, processing for when the user confirms and edits defect information using an individual viewer will be described.

The user specifies a partial image to be displayed in the individual viewer. The individual viewer makes a request for with a list of defect information associated with the partial image specified by the user to the server, and the server transmits and to the individual viewer a partial image and a list of defect information to be transmitted to the individual viewer.

The individual viewer displays the partial image and defect information acquired from the server to be overlapped. The list of defect information may be displayed in a tabular format so as to support various kinds of editing work of the user, and the display format is not particularly limited. The user performs inspection work with the individual viewer, such as confirming defect information and comparing the defect information with a defect of the structure on site. The user performs editing work of defect information, such as adding undetected cracking or deleting an erroneously detected defect, according to inspection work.

The individual viewer stores this edited content. When editing of defect information is completed, the individual viewer transmits edited content to the server. The server determines whether there is a conflict in the edited content with the drawing viewer and transmits the determination result to the individual viewer. When there is a conflict in the edited content between the viewers, for example, the user performs editing again in the individual viewer to resolve the conflict and the re-edited content is transmitted to the server. Any of the known techniques may be used to resolve the conflict in edited content. It is also possible to prevent a conflict from occurring by an exclusive control mechanism, such as a check-out lock, without using a method of detecting a conflict in edited content and prompting the user to resolve the conflict.

Next, processing for when the user confirms latest defect information using the drawing viewer and generates an inspection report will be described.

The user specifies using the drawing viewer a structure to be inspected that they want to display. The drawing viewer makes a request to the server for a list of defect information of the entire structure to be inspected, and the server transmits partial images of the structure to be inspected and a list of defect information to the drawing viewer in response to the request. The drawing viewer displays the partial images and defect information acquired from the server to be overlapped. The user confirms the defect information and inputs necessary information to the inspection report with the drawing viewer. The drawing viewer transmits edited content of the defect information to the server and similarly to the above-described individual viewer, performs each process of confirming the edited content, determining a conflict, and resolving the conflict. The drawing viewer outputs the inspection report in which the edited content has been reflected and ends the processing.

As described above, according to the third embodiment, it is possible to edit a list of defect information for each partial image in which each piece of defect information has been given unique identification information and a list of defect information in which the defect information for each partial image has been merged into the drawing information of the entire structure to be inspected, using different viewers depending on the application. This makes it possible to facilitate inspection work and the work of generating an inspection report.

In addition, it is possible to uniquely distinguish defect information by their identification information, and so it is possible to integrally manage editing work in different viewers for the entire structure. In addition, by using a list of defect information of a coordinate system adjusted to the viewer, it is possible to display defect information to be superimposed as is in both partial image units and structure drawing units.

In each of the above-described embodiments, it has been described that there is one information processing apparatus; however, functions may be divided into that of a server and a client and executed in a plurality of information processing apparatuses. For example, a user inputs partial images from the client, the server detects defects, and transmits a list of defect information to the client. Regarding the list of defect information, the user may be allowed to select a list of defect information of the image coordinate system, a list of defect information of the drawing coordinate system, a list divided for each partial image, or a list merged in group units, or all of the combinations may be outputted.

### [OTHER EMBODIMENTS]

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

An information processing apparatus comprises an input unit that inputs one or more images belonging to a predetermined group, a detection unit that detects defect information based on an image inputted by the input unit, a setting unit that sets identification information that is unique within the predetermined group to the defect information detected by the detection unit, and an output unit that outputs a detection result including the defect information to which the identification information has been given by the setting unit.

## Claims

1. An information processing apparatus comprising:
input means (323) configured to input one or more images belonging to a predetermined group;
detection means (324) configured to detect defect information based on an image inputted by the input means;
setting means (325) configured to set identification information that is unique within the predetermined group to the defect information detected by the detection means; and
output means (327) configured to output a detection result including the defect information to which the identification information has been given by the setting means.

2. The information processing apparatus according to claim 1, further comprising:
information adding means (326) configured to add to the detection result, image information for arranging the defect information in the image.

3. The information processing apparatus according to claim 2, wherein
the image information is outer shape information of the image.

4. The information processing apparatus according to claim 3, wherein
the information adding means gives unique identification information to the outer shape information of the image.

5. The information processing apparatus according to any one of claims 1 to 4, further comprising:
coordinate transformation means (328) configured to transform first coordinate information representing a position of the defect information in the image to second coordinate information.

6. The information processing apparatus according to claim 5, wherein
the coordinate transformation means offsets coordinate information of defect information for each of the images in a predetermined pattern.

7. The information processing apparatus according to claim 6, wherein
a user is able to select the predetermined pattern.

8. The information processing apparatus according to any one of claims 5 to 7, wherein
the image is an image (500) in which a structure to be inspected is captured, and
the second coordinate information is coordinate information representing a position of the image in drawing information of the structure to be inspected.

9. The information processing apparatus according to any one of claims 1 to 8, wherein
when defect information to which identification information has already been given is detected again, the setting means gives new identification information.

10. The information processing apparatus according to any one of claims 1 to 9, wherein
the setting means gives the same identification information to defect information considered to be the same as defect information to which identification information has already been given.

11. The information processing apparatus according to any one of claims 1 to 8, wherein
the output means outputs a first detection result for each of the images, and a second detection result for which a detection result of each of the images has been merged for the predetermined group.

12. The information processing apparatus according to claim 11, wherein
defect information of the first detection result is represented in coordinate information representing a position of the defect information in the image, and
defect information of the second detection result is represented in coordinate information representing a position of the image in drawing information of a structure to be inspected.

13. The information processing apparatus according to claim 12, wherein
the information processing apparatus includes a first viewer (1201) configured to display the first detection result to be superimposed on the image so as to be editable, and a second viewer (1211) configured to display the second detection result to be superimposed on drawing information of a structure to be inspected so as to be editable.

14. The information processing apparatus according to claim 13, wherein
content edited in the first viewer is reflected in the second detection result and content edited in the second viewer is reflected in the first detection result.

15. The information processing apparatus according to claim 11, wherein
the image is a partial image (500) in which a portion of a structure to be inspected is captured,
the first detection result includes defect information detected for each partial image,
the second detection result includes defect information for which the defect information detected for each partial image has been merged for an entirety of the structure to be inspected.

16. An information processing method comprising:
inputting one or more images belonging to a predetermined group (S401);
detecting defect information based on an inputted image (S402);
setting identification information that is unique within the predetermined group to the detected defect information (S403); and
outputting a detection result including the defect information to which the identification information has been given (S407).

17. A computer-readable storage medium storing a program that causes a computer to execute the method according to claim 16.

18. A program that causes a computer to execute the method according to claim 16.
